# EUROPÄISCHE PATENTSCHRIFT

(11) **EP 1 342 402 B1**
(45) Veröffentlichungstag und Bekanntmachung des Hinweises auf die Patenterteilung: **05.12.2007**
(21) Anmeldenummer: 03003708.9
(22) Anmeldetag: 19.02.2003
(51) Int. Cl.: A01F 12/40

(54) **Verfahren zur Verstellung von Führungsblechen und Häcksler zur Durchführung des Verfahrens**
Method for adjusting guiding plates and chopper to carry out the method
Procédé de réglage de plaques de guidage et une hacheuse pour la mise en oeuvre du procédé

(30) Priorität: 06.03.2002 DE 10209722
(43) Veröffentlichungstag der Anmeldung: 10.09.2003
(73) Patentinhaber: CLAAS Selbstfahrende Erntemaschinen GmbH, 33428 Harsewinkel (DE)
(72) Erfinder: Niermann, Martin, 33428 Harsewinkel (DE); Brinkmann, Jörn, 33428 Harsewinkel (DE)

(56) Entgegenhaltungen:
- BE-A- 1 005 558
- DE-A- 3 838 936
- GB-A- 2 009 576
- US-A- 2 708 582
- US-A- 5 569 081

## Beschreibung

Die Erfindung betrifft ein Verfahren zur Änderung der Lage mindestens eines einendig festgelegten Führungsbleches zur Veränderung der Fließrichtung eines Gutstromes und einen Hücksler zur Durchführung des Verfahrens.

Bei Häckslern für landwirtschaftliches Erntegut ist es bekannt, zur Verstellung von in einem dem Häcksler nachgeordneten Auswurfkanal mit Abstand nebeneinander angeordneten Führungsblechen, diese an ihren in Gutflussrichtung vorderen Enden um je eine Achse verschwenkbar im Auswurfkanal zu befestigen. Auf diese Weise ist es beispielsweise bei einem Anbauhäcksler für Mähdrescher möglich, Erntegut entsprechend der Breite des eingesetzten Schneidwerkes zu verteilen und zwar durch entsprechende Verschwenkung der Führungsbleche. In zufriedenstellender Weise ist dies nur bei kleinen Schneidwerksbreiten möglich, weil die ebenen Führungsbleche lediglich um einen geringen Betrag verschwenkt werden müssen. Bei großen Schneidwerksbreiten ist es aber erforderlich, die Führungsbleche sehr stark auszulenken. Dies hat zur Folge, dass mit zunehmender Auslenkung die von je zwei Führungsblechen gebildeten Förderschachtteile zunehmend verengen und die dem Gutstrom inne wohnende Energie nicht zuletzt durch die abrupte Umlenkung zum großen Teil aufgezehrt wird.

Aus der BE-A-1005558 ist eine Verteileinrichtung für ein Streuaggregat eines Häckslers an einem Mähdrescher bekannt, bei der Leitbleche bei ihrer Verschwenkung jeweils um einen ortsfesten Anschlag herum verschwenkt werden. Nachteilig an der bekannten Verteilvorrichtung ist es, dass die Verstellung der Leitbleche nur auf einem sehr kurzen Längenbereich der Leitbleche erfolgt, so dass zum Einen ein sehr hoher Kraftaufwand zur Verstellung der Leitbleche erforderlich ist und zum Anderen insbesondere die äußeren Leitbleche zur Verteilung auf sehr große Streubreiten sehr stark ausgelenkt werden müssen, wodurch die dem Gutstrom innewohnende Energie nicht zuletzt durch die abrupte Umlenkung zum großen Teil aufgezehrt wird.

Der Erfindung liegt daher die Aufgabe zugrunde, Führungsbleche in einem Auswurfkanal derart zu verstellen, dass ein Gutstrom auch auf große Breiten gleichmäßig verteilt werden kann und zwar auf einfache Art und Weise.

Die Aufgabe wird dadurch gelöst, dass die zur Verstellung eines Führungsbleches zwecks Veränderung der Fließrichtung notwendige Kraft so in das Führungsblech eingeleitet wird, dass das Blech unabhängig vom Grad seiner Verstellung stets zumindest annähernd einen Mantelteil eines Kreiszylinders bildet. Bei einem Verfahren, bei dem mehrere Führungsbleche nebeneinander angeordnet sind, ist es für eine gleichmäßige Verteilung des Gutstromes erforderlich, dass die in die Führungsbleche eingeleitete Kraft beginnend von der Mitte aus zu beiden Seiten hin zunimmt.

Bei einem Häcksler zur Durchführung des erfindungsgemäßen Verfahrens ist vorgesehen, dass jedes Führungsblech mittels eines Lenkers verschwenkbar ist, wobei der Lenker einerseits an einer oberen Abdeckung des Auswurfkanals und andererseits an dem Führungsblech angelenkt ist. Eine solche Anordnung macht das Einleiten eines von der übertragenen Kraft F abhängigen Drehmomentes in jedes Führungsblech möglich. Jedes Führungsblech ist dabei mit seinem der Förderrichtung des Gutstromes entgegengesetzten Ende im Auswurfkanal befestigt. Dabei hat es sich als zweckmäßig erwiesen, wenn jedes Führungsblech an seinem der Förderrichtung entgegengesetzten Ende eine Verstärkung aufweist, die einendig mit der oberen Abdeckung des Auswurfkanals und anderenends mit seinem Boden fest verbunden ist. Die Führungsbleche sind demzufolge einendig fest im Führungskanal angeordnet und nicht mehr, wie ansonsten üblich, um Achsen drehbar gelagert. Verschleißerscheinungen sind somit in diesem Bereich nahezu ausgeschlossen. Zweckmäßiger Weise liegen die beiden Befestigungspunkte eines jeden Führungsbleches auf einer senkrecht zur Förderrichtung verlaufenden Achse.

Ein wesentliches Merkmal der Erfindung ist darin zu sehen, dass die beiden Anlenkpunkte eines jeden Lenkers in Gutstromförderrichtung betrachtet hinter der Verstärkung des Führungsbleches liegen. Mit Vorteil liegt dabei der Anlenkpunkt eines Lenkers an der oberen Abdeckung näher an der die Befestigungspunkte des zugehörigen Führungsbleches verbindenden Achse als der Anlenkpunkt dieses Lenkers am Führungsblech. Haptische Versuche haben gezeigt, dass eine optimale Einstellung der Führungsbleche dann erreicht wird, wenn der Abstand des Anlenkpunktes eines Lenkers an der oberen Abdeckung zur Befestigung des zugehörigen Führungsbleches im Auswurfkanal etwa einem Drittel der Gesamtlänge des Führungsbleches entspricht.

Auf konstruktiv einfache Art und Weise liegen jedes Führungsblech und der ihm zugeordnete Lenker in Neutralstellung in Gutstromförderrichtung ausgerichtet und in jeweils einer senkrechten Ebene.

Ein weiteres Merkmal der Erfindung ist darin zu sehen, dass die Anlenkpunkte der Lenker an den in Gutförderrichtung betrachtet hinteren Enden der Führungsbleche vorgesehen sind. Diese Anordnung ermöglicht es, die Führungsbleche über ihre gesamte Länge gleichmäßig bogenförmig zu verstellen.

Zwecks Verstellung der Lenker selbst greifen an diesen mindestens zwei kraftbeaufschlagbare Verstellhebel an, wobei zwei Gruppen von entgegengesetzt verschwenkbaren Führungsblechen vorgesehen sind und jeder Gruppe je ein Verstellhebel zugeordnet ist.

Um im Sinne einer gleichmäßigen Gutverteilung die Biegeradien der Führungsbleche beginnend von der Mitte des Auswurfkanals nach außen hin zu verringern, greifen die Verstellhebel beginnend von der Mitte des Auswurfkanals in zunehmend geringerem Abstand von den Anlenkpunkten der Lenker an der oberen Abdeckung an diesen Lenkern an. Um dabei nicht immer vermeidbare Relativbewegungen des Anlenkpunktes eines Verstellhebels an einem Lenker ausgleichen zu können, ist jeder Verstellhebel über zumindest einem Lenker über einen sogenannten Schubstangenkopf mit zumindest einem Lenker einer Gruppe von Lenkern verbunden. Durch den abnehmenden Biegeradius der äußeren Führungsbleche nimmt deren Krümmung zu, sodass an diesen stärker gekrümmten Führungsblechen entlanggeführtes Erntegut eine intensiver nach außen gerichtete Wurfbewegung ausführt. Dies hat den Vorteil, dass auch bei großen Arbeitsbreiten eine Verteilung des gehäckselten Gutes bis in die äußeren Randbereiche der Arbeitsbreite der Maschine gewährleistet ist.

Um Führungsbleche im Sinne der Erfindung auf eine andere Art und Weise verstellen zu können, wird alternativ vorgeschlagen, dass an den in Gutförderrichtung hinteren Endbereichen der Führungsbleche Mitnehmer angeordnet sind, von denen jeder einer vorgegebenen Führungsbahn folgend verstellbar ist. Dies wird auf konstruktiv einfache Art und Weise dadurch erreicht, dass in einer oberen Abdeckung des Auswurfkanals Führungsnuten vorgesehen sind, entlang der, die als Zapfen ausgebildeten Mitnehmer, geführt sind. Zweckmäßiger Weise verlaufen die Führungsnuten kreisbogenförmig. Dabei hat es sich als zweckmäßig herausgestellt, dass die Radien der Führungsnuten beginnend von der Mitte des Auswurfkanals hin zu beiden Seiten kleiner werden.

Im folgenden soll die Erfindung anhand zweier schematisch dargestellter Figuren näher erläutert werden. Dabei zeigen:
- Fig. 1: einen Häcksler mit nachgeordnetem Auswurfkanal in der Seitenansicht,
- Fig. 2: den in Fig. 1 dargestellten Häcksler in der Draufsicht und
- Fig. 3: eine gegenüber den Fig. 1 und Fig. 2 abgewandelte Ausführungsform
- Fig. 4: eine Schnittdarstellung nach Linie IV- IV in Fig. 3

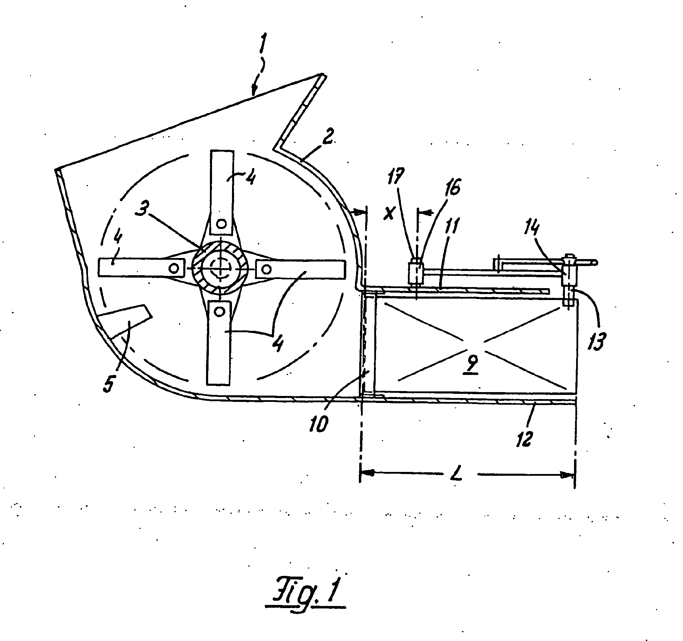

Mit 1 ist ein einem nicht dargestellten Mähdrescher zugeordneter Häcksler 1 bezeichnet, der ein Häckslergehäuse 2 aufweist, in dem eine Häckslerwelle 3 gelagert ist. Die Häckslerwelle 3 ist mit beweglichen Messern 4 besetzt, die mit im Häckslergehäuse 2 fest angeordneten Gegenmessern 5 kämmen. Die Häckslerwelle 3 selbst ist in den Seitenwänden 6 des Gehäuses 2 mittels ihrer Endzapfen 7 gelagert, wobei auf das Ende eines Zapfens 7 eine Riemenscheibe 7a aufgesetzt ist über die die Häckslerwelle 1 auf nicht dargestellte Art und Weise antreibbar ist. Der sich an das Häckslergehäuse 2 anschließende Auswurfkanal 8 ist gegenüber dem Häckslergehäuse 2 verbreitert. In diesem Auswurfkanal 8 sind eine Vielzahl von noch näher zu beschreibenden Führungsblechen 9 angeordnet. Jedes Führungsblech 9 weist an seinem der Häckslerwelle 3 zugewandtem Ende eine Aufnahme 10 auf, die einerseits mit der oberen Abdeckung 11 des Auswurfkanals 8 und andererseits mit dem Boden 12 fest verschweißt ist. Die Führungsbleche 9 selbst bestehen vorzugsweise aus ebenen relativ dünnen Blechzuschnitten. Wie die Fig. 1 erkennen lässt, ragen die Führungsbleche 9 über das Ende der oberen Abdeckung 11 hinaus. In diesem hinteren Bereich eines jeden Führungsbleches 9 ist an dieses ein Zapfen 13 angeschweißt, auf den eine erste Hülse 14 aufgesetzt ist. Fest mit dieser Hülse 14 ist ein Ende eines Lenkers 15 verbunden, dessen anderes Ende an einer weiteren Hülse 16 befestigt ist. Die Hülse 16 ist auf einen Zapfen 17 aufgesetzt, der mit der oberen Abdeckung 11 verschweißt ist. Die senkrecht verlaufende Achse des Zapfens 17 weist von der senkrechten Achse der Verstärkung 10 einen Abstand X auf, der etwa einem Drittel der Gesamtlänge L eines Führungsbleches 9 entspricht.

Die den Führungsblechen 9 a und 9 b zugeordneten Zapfen 13 tragen neben den Hülsen 14 weitere Hülsen 18. Mit jeder dieser Hülsen 18 ist ein Verstellhebel 19 bzw. 20 verbunden, die mit ihren nach außen weisenden Enden etwa mittig und gelenkig an den beiden äußeren Lenkern 15 a und 15 b befestigt sind. Der zwischen den Lenkern 15 und 15a vorgesehene dritte Lenker 15c einer ersten Gruppe von Führungsblechen 9 weist einen Schubstangenkopf 21 auf, an dem der Verstellhebel 19 gelenkig befestigt ist. Dies gilt analog auch für den Lenker 15 d und dem ihm zugeordneten Verstellhebel 20. An die Verstellhebel 19 und 20 greifen Kolbenzylindereinheiten 22 und 23 an.

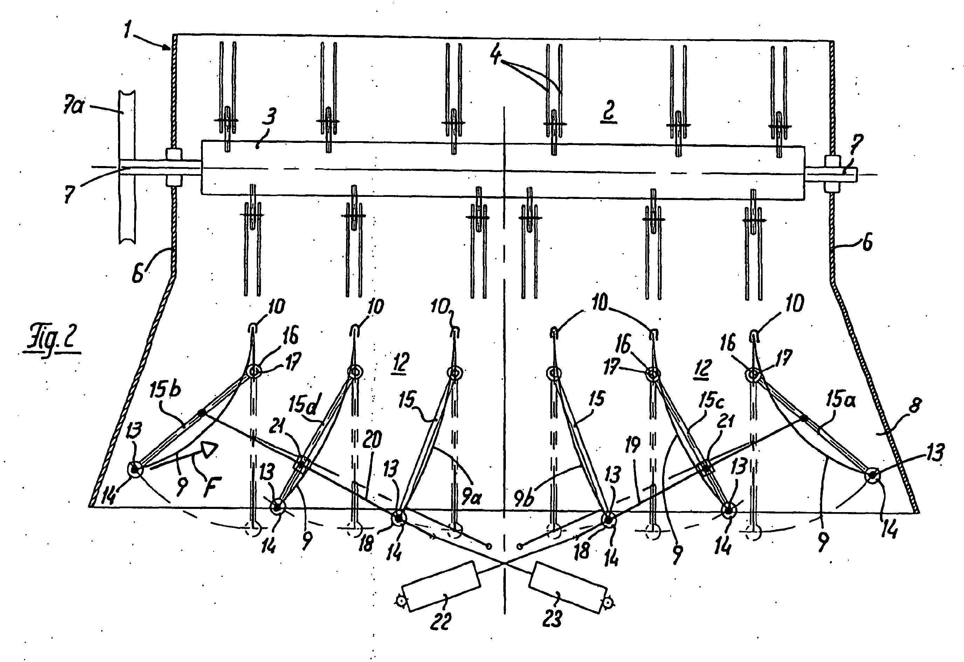

In der Fig. 2 ist die Neutralstellung der Führungsbleche 9, also die Stellung, in er das Gut nicht abgelenkt wird, mit gestrichelten Linien dargestellt. Dies gilt ebenso für die Lenker 15. Hieraus ist zu erkennen, dass jedes Führungsblech 9 und der ihm jeweils zugeordneten Lenker 15 in einer gemeinsamen senkrechten Ebene liegen, wobei die Ebenen in Gutförderrichtung ausgerichtet sind.

Aus Fig. 2 ist zu erkennen, dass die über die Verstellhebel 19 und 20 aufgebrachten Momente gleichmäßig über die Menge der Führungsbleche 9 verteilt sind, so dass die Führungsbleche 9, in welcher momentanen Lage auch immer stets einem Kreisbogen folgen. Dies hat zur Folge, dass das Fördergut einerseits weich umgelenkt wird und andererseits die Öffnungsweiten der einzelnen Kanalteile stets gleich bleiben.

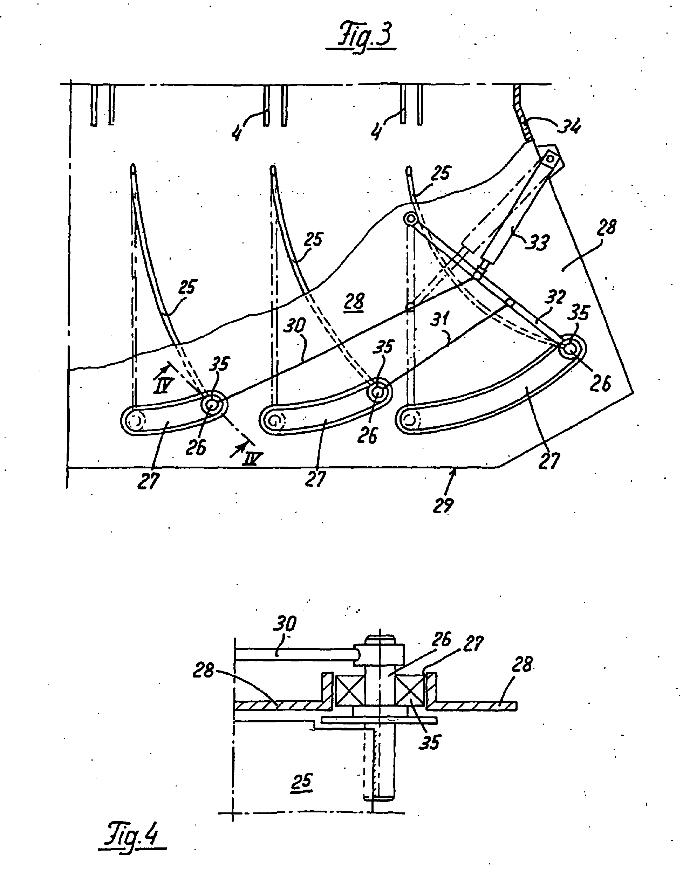

Bei dem in den Fig. 3 und 4 dargestellten Ausführungsbeispiel sind in der oberen Abdeckung 28 des Auswurfkanals 29 der Anzahl der Führungsbleche 25 entsprechend Führungsbahnen 27 vorgesehen. In diesen Führungsbahnen 27 laufen Kugellager 35, welche die mit den Endbereichen der Führungsbleche 25 fest verbunden als Zapfen ausgebildeten Mitnehmer 26 umgreifen. Auf die nach oben überstehenden Enden der Mitnehmer 26 sind Hebel 30-32 aufgesetzt, durch die die Mitnehmer entlang der Führungsbahnen 27 zum Zwecke der Verstellung der Führungsbleche 25 bewegt werden können. Wie aus Fig. 3 zu sehen ist, ist der Hebel 32 an seinem ihm zugeordneten Mitnehmer 26 abgewandten Ende schwenkbar an der oberen Abdeckung 28 gelagert. Die Schwenkbewegung wird durch eine Kolbenzylindereinheit 33 eingeleitet, die mit der Seitenwand 34 des Führungskanals 29 verbunden ist. Die Hebel 30 und 31 sind an ihren den Mitnehmern 26 abgewandten Enden mit dem Hebel 32 gelenkig verbunden. Demzufolge werden bei Betätigung der Kolbenzylindereinheit 33 alle Hebel 30,31 und 32 gleichzeitig bewegt und damit alle Mitnehmer 26 innerhalb der Führungsbahnen 27 verschoben. Die Hebelverhältnisse sind so gewählt, dass trotz unterschiedlicher Länge der Führungsbahnen 27 alle Mitnehmer ihren vollen Verstellweg durchfahren können.

### Bezugszeichenliste

- 1: Häcksler
- 2: Häckslergehäuse
- **3**: Häckslerwelle
- 4: Messer
- 5: Gegenmesser
- 6: Seitenwände
- 7: Endzapfen
- 7a: Riemenscheibe
- 8: Auswurfkanal
- 9: Führungsblech
- 9a: Führungsblech
- 9b: Führungsblech
- 10: Aufnahme
- 11: Abdeckung
- 12: Boden
- 13: Zapfen
- 14: Hülse
- 15: Lenker
- 15a: Lenker
- 15b: Lenker
- 15c: Lenker
- 15d: Lenker
- 16: Hülse
- 17: Zapfen
- 18: Hülse
- 19: Verstellhebel
- 20: Verstellhebel
- 21: Schubstangenkopf
- 22: Kolbenzylindereinheit

- 23: Kolbenzylindereinheit
- 25: Führungsblech
- 26: Mitnehmer
- 27: Führungsbahnen
- 28: Abdeckung
- 29: Auswurfkanal
- 30: Hebel

- 31: Hebel
- **32**: **Hebel**
- 33: Kolbenzylindereinheit
- 34: Seitenwand
- 35: Kugellager
- X: Abstand
- L: Gesamtlänge
- F: Kraft

## Patentansprüche

1. Verfahren zur Änderung der Lage mindestens eines einendig festgelegten Führungsbleches zur Veränderung der Fließrichtung eines Gutstroms,
**dadurch gekennzeichnet,**
**dass** die zur Verstellung mindestens eines Führungsbleches (9) zwecks Veränderung der Fließrichtung notwendige Kraft (F) so in das Führungsblech (9) eingeleitet wird, dass das Blech (9) unabhängig vom Grad seiner Verstellung stets zumindest annähernd einen Mantelteil eines Kreiszylinders bildet und wobei die Kraft (F) am in Gutförderrichtung betrachteten hinteren Ende des einenends festgelegten Führungsblechs (9) in das Führungsblech (9) eingeleitet wird.

2. Häcksler mit einem nachgeordneten Auswurfkanal mit Abstand nebeneinander angeordneten Führungsblechen und mit einer Vorrichtung zur Verstellung der Führungsbleche zur Durchführung des Verfahrens nach Anspruch 1,
**dadurch gekennzeichnet,**
**dass** jedes Führungsblech (9) mittels eines Lenkers (15) verschwenkbar ist, wobei der Lenker (15) einerseits mit einer oberen Abdeckung (11) des Auswurfkanals (8) und andererseits an dem Führungsblech (9) angelenkt ist.

3. Häcksler mit einer Vorrichtung nach Anspruch 2,
**dadurch gekennzeichnet,**
**dass** jedes Führungsblech (9) mit seinem der Förderrichtung entgegengesetztem Ende im Auswurfkanal (8) befestigt ist.

4. Häcksler mit einer Vorrichtung nach einem oder mehreren der Ansprüche 2 und 3,
**dadurch gekennzeichnet,**
**dass** jedes Führungsblech (9) an seinem der Förderrichtung entgegengesetzten Ende eine Aufnahme (10) aufweist, die einendig sowohl mit der oberen Abdeckung (11) des Auswurfkanals (8) als auch mit seinem Boden (12) fest verbunden ist.

5. Häcksler mit einer Vorrichtung nach einem oder mehreren der Ansprüche 2 bis 4,
**dadurch gekennzeichnet,**
**dass** die beiden Befestigungspunkte eines jeden Führungsbleches (9) auf einer senkrecht zur Förderrichtung verlaufenden Achse liegen.

6. Häcksler mit einer Vorrichtung nach einem oder mehreren der Ansprüche 2 bis 5,
**dadurch gekennzeichnet,**
**dass** die Anlenkpunkte (13,16,17) eines jeden Lenkers (15) in Gutstromförderrichtung der Verstärkung (10) des Führungsbleches (9) nach-geordnet sind.

7. Häcksler mit einer Vorrichtung nach einem oder mehreren der Ansprüche 2 bis 6,
**dadurch gekennzeichnet,**
**dass** der Abstand X zwischen dem Anlenkpunkt (16,17) wenigstens eines Lenkers (15) an der oberen Abdeckung (11) und dem Fixierbereich (10) des zugehörigen Führungsbleches (9) im Auswurfkanal (8) etwa einem Drittel der Gesamtlänge L eines Führungsbleches (9) entspricht.

8. Häcksler mit einer Vorrichtung nach einem oder mehreren der Ansprüche 2 bis 7,
**dadurch gekennzeichnet,**
**dass** jedes Führungsblech (9) und der ihm jeweils zugeordnete Lenker (15) in Neutralstellung in Gutstromförderrichtung ausgerichtet sind, und in jeweils einer senkrechten Ebene liegen.

9. Häcksler mit einer Vorrichtung nach einem oder mehreren der Ansprüche 2 bis 8,
**dadurch gekennzeichnet,**
**dass** die rückwärtigen Anlenkpunkte (13) der Lenker (15) an den Führungsblechen (9) am in Gutförderrichtung betrachtet hinteren Enden der Führungsbleche (9) vorgesehen sind.

10. Häcksler mit einer Vorrichtung nach einem oder mehreren der Ansprüche 2 bis 9,
**dadurch gekennzeichnet,**
**dass** zwecks Verstellung der Lenker (15) an diesen mindestens zwei kraftbeaufschlagbare Verstellmittel angreifen.

11. Häcksler mit einer Vorrichtungen nach einem oder mehreren der Ansprüche 2 bis 10,
**dadurch gekennzeichnet,**
**dass** zumindest zwei Gruppen von entgegengesetzt verschwenkbaren Führungsblechen (9) vorgesehen sind, und jeder Gruppe zumindest je ein Verstellhebel (19,20) zugeordnet ist.

12. Häcksler mit einer Vorrichtung nach einem oder mehreren der Ansprüche 2 bis 11,
**dadurch gekennzeichnet,**
**dass** die Verstellhebel (19, 20) beginnend von der Mitte des Auswurfkanals (8) in zunehmend geringerem Abstand von den vorderen Anlenkpunkten (17) der jeweiligen Lenker (15) an der oberen Abdeckung (11) mit diesen Lenkern (15) verbunden sind.

13. Häcksler mit einer Vorrichtung nach einem oder mehreren der Ansprüche 2 bis 12,
**dadurch gekennzeichnet,**
**dass** jeder Verstellhebel (19,20) mit zumindest einem Lenker (15c bzw. 15d) über einen Schubstangenkopf (21) verbunden ist.

14. Häcksler mit einer Vorrichtung nach einem oder mehreren der Ansprüche 1 bis 3,
**dadurch gekennzeichnet,**
**dass** an den in Gutförderrichtung hinteren Endbereichen der Führungsbleche (25) Mitnehmer (26) angeordnet sind, von denen jeder einer vorgegebenen Führungsbahn (27) folgend verstellbar ist.

15. Häcksler mit einer Vorrichtung nach Anspruch 14,
**dadurch gekennzeichnet,**
**dass** in einer oberen Abdeckung (28) des Auswurfkanals (29) Führungsbahnen (27) vorgesehen sind, entlang der die als Zapfen ausgebildeten Mitnehmer (26) geführt sind.

16. Häcksler mit einer Vorrichtung nach einem oder mehreren der Ansprüche 14 und 15,
**dadurch gekennzeichnet,**
**dass** die Führungsbahnen (27) einem Radius folgend verlaufen, wobei zwischen benachbarten Führungsbahnen (27) die Führungsbahn (27) dem kleineren Radius folgt, die weiter außen angeordnet ist.

17. Häcksler mit einer Vorrichtung nach einem oder mehreren der Ansprüche 14 bis 16,
**dadurch gekennzeichnet,**
**dass** die Führungsbahnen (27) Gruppen von Führungsbahnen (27) bilden und die jeweils weiter außen liegende Führungsbahn (27) zwischen benachbarten Führungsbahnen (27) die größere Länge aufweist beginnend von der Mitte (M) des Auswurfkanals (29) aus zu beiden Seiten hin länger werdend.

## Claims

1. A method of altering the position of at least one guide plate which is fixed at one end, for varying the direction of flow of a flow of material,
**characterised in that**
the force (F) necessary for displacement of at least one guide plate (9) for the purposes of varying the direction of flow is applied to the guide plate (9) in such a way that irrespective of the degree of its displacement the plate (9) always forms at least approximately a part of the periphery of a circular cylinder and wherein the force (F) is applied to the guide plate (9) at the rear end considered in the material conveyor direction of the guide plate (9) which is fixed at one end.

2. A chaff cutter having a downstream-arranged discharge passage, guide plates arranged at a mutual spacing and a device for displacing the guide plates for carrying out the method according to claim 1
**characterised in that**
each guide plate (9) is pivotable by means of a connecting link (15), wherein the connecting link (15) is pivotably connected on the one hand to an upper cover (11) of the discharge passage (8) and on the other hand to the guide plate (9).

3. A chaff cutter having a device according to claim 2 **characterised in that** each guide plate (9) is fixed in the discharge passage (8) with its end in opposite relationship to the conveyor direction.

4. A chaff cutter having a device according to one or more of claims 2 and 3 **characterised in that** at its end in opposite relationship to the conveyor direction each guide plate (9) has a receiving means (10) which at one end is fixedly connected both to the upper cover (11) of the discharge passage (8) and also to its bottom (12).

5. A chaff cutter having a device according to one or more of claims 2 to 4 **characterised in that** the two fixing points of each guide plate (9) lie on an axis extending perpendicularly to the conveyor direction.

6. A chaff cutter having a device according to one or more of claims 2 to 5 **characterised in that** the pivotal connecting points (13, 16, 17) of each connecting link (15) are arranged downstream of the reinforcement (10) of the guide plate (9) in the material flow conveyor direction.

7. A chaff cutter having a device according to one or more of claims 2 to 6 **characterised in that** the spacing X between the pivotal connecting point (16, 17) of at least one connecting link (15) at the upper cover (11) and the fixing region (10) of the associated guide plate (9) in the discharge passage (8) approximately corresponds to a third of the total length L of a guide plate (9).

8. A chaff cutter having a device according to one or more of claims 2 to 7 **characterised in that** each guide plate (9) and the connecting link (15) respectively associated therewith are oriented in the material flow conveyor direction in the neutral position and are disposed in a respective perpendicular plane.

9. A chaff cutter having a device according to one or more of claims 2 to 8 **characterised in that** the rearward pivotal connecting points (13) of the connecting links (15) at the guide plates (9) are provided at the rear ends of the guide plates (9), as considered in the material conveyor direction.

10. A chaff cutter having a device according to one or more of claims 2 to 9 **characterised in that** for the purposes of displacement of the connecting links (15) at least two displacement means which can be force-actuated engage the connecting links.

11. A chaff cutter having a device according to one or more of claims 2 to 10 **characterised in that** there are provided at least two groups of oppositely pivotable guide plates (9) and at least one respective displacement lever (19, 20) is associated with each group.

12. A chaff cutter having a device according to one or more of claims 2 to 11 **characterised in that** the displacement levers (19, 20), are connected to said connecting links (15) at an increasingly small distance, beginning from the centre of the discharge passage (8), from the front pivotal connecting points (17) of the respective connecting links (15) to the upper cover (11).

13. A chaff cutter having a device according to one or more of claims 2 to 12 **characterised in that** each displacement lever (19, 20) is connected to at least one connecting link (15c or 15d respectively) by way of a thrust rod head (21.

14. A chaff cutter having a device according to one or more of claims 1 to 3 **characterised in that** arranged at the end regions of the guide plates (25), which are the rear end regions in the material conveyor direction, are entrainment members (26), each of which is displaceable in a condition of following a predetermined guide path (27).

15. A chaff cutter having a device according to claim 14 **characterised in that** provided in an upper cover (28) of the discharge passage (29) are guide paths (27) along which the entrainment members (26) which are in the form of projections are guided.

16. A chaff cutter having a device according to one or more of claims 14 and 15 **characterised in that** the guide paths (27) extend following a radius, wherein between adjacent guide paths (27) the guide path (27) which is arranged further outwardly follows the smaller radius.

17. A chaff cutter having a device according to one or more of claims 14 to 16 **characterised in that** the guide paths (27) form groups of guide paths (27) and the respective further outwardly disposed guide path (27) between adjacent guide paths (27) is of the greater length, becoming longer beginning from the centre (M) of the discharge passage (29) towards both sides.

## Revendications

1. Procédé pour modifier la position d'au moins une tôle de guidage fixée par une extrémité afin de modifier la direction d'écoulement d'un flux de produit, **caractérisé en ce que** la force (F) nécessaire au déplacement d'au moins une tôle de guidage (9) dans le but de modifier la direction d'écoulement est appliquée à la tôle de guidage (9) de façon que, indépendamment du degré de son déplacement, la tôle (9) forme toujours au moins approximativement une partie d'enveloppe d'un cylindre circulaire, la force (F) étant appliquée à la tôle de guidage (9), fixée par une extrémité, au niveau de son extrémité située à l'arrière par rapport à la direction d'écoulement du produit.

2. Broyeur avec un canal d'éjection aval muni de tôles de guidage juxtaposées à distance les unes des autres et d'un dispositif pour déplacer les tôles de guidage afin de réaliser le procédé selon la revendication 1, **caractérisé en ce que** chaque tôle de guidage (9) peut pivoter au moyen d'un bras (15), le bras (15) étant articulé, d'une part, sur un capot supérieur (11) du canal d'éjection (8) et, d'autre part, sur la tôle de guidage (9).

3. Broyeur avec un dispositif selon la revendication 2,
**caractérisé en ce que** chaque tôle de guidage (9) est fixée dans le canal d'éjection (8) par son extrémité située à l'opposé de la direction d'écoulement.

4. Broyeur avec un dispositif selon une ou plusieurs des revendications 2 et 3, **caractérisé en ce que** chaque tôle de guidage (9) comporte, à son extrémité située à l'opposé de la direction d'écoulement, un logement (10) qui est solidarisé par l'une de ses extrémités aussi bien au capot supérieur (11) du canal d'éjection (8) qu'au fond (12) de celui-ci.

5. Broyeur avec un dispositif selon une ou plusieurs des revendications 2 à 4, **caractérisé en ce que** les deux points de fixation de chaque tôle de guidage (9) se trouvent sur un axe s'étendant perpendiculairement à la direction d'écoulement.

6. Broyeur avec un dispositif selon une ou plusieurs des revendications 2 à 5, **caractérisé en ce que** les points d'articulation (13, 16, 17) de chaque bras (15) sont situés, par rapport à la direction d'écoulement du flux de produit, en aval du renfort (10) de la tôle de guidage (9).

7. Broyeur avec un dispositif selon une ou plusieurs des revendications 2 à 6, **caractérisé en ce que** la distance X entre le point d'articulation (16, 17) d'au moins un bras (15) sur le capot supérieur (11) et la zone d'immobilisation (10) de la tôle de guidage associée (9)- dans le canal d'éjection (8) correspond environ à un tiers de la longueur totale L d'une tôle de guidage (9).

8. Broyeur avec un dispositif selon une ou plusieurs des revendications 2 à 7, **caractérisé en ce que**, en position neutre, chaque tôle de guidage (9) et le bras (15) qui lui est associé sont orientés dans la direction d'écoulement du flux de produit et se trouvent dans des plans respectifs perpendiculaires.

9. Broyeur avec un dispositif selon une ou plusieurs des revendications 2 à 8, **caractérisé en ce que** les points d'articulation arrière (13) des bras (15) sur les tôles de guidage (9) se trouvent à l'extrémité des tôles de guidage (9) située à l'arrière par rapport à la direction d'écoulement du produit.

10. Broyeur avec un dispositif selon une ou plusieurs des revendications 2 à 9, **caractérisé en ce qu'**au moins deux moyens de déplacement sollicitables par une force agissent sur les bras (15) dans le but de les déplacer.

11. Broyeur avec un dispositif selon une ou plusieurs des revendications 2 à 10, **caractérisé en ce qu'**il est prévu au moins deux groupes de tôles de guidage (9) aptes à pivoter dans des directions opposées, et au moins un levier de déplacement (19, 20) est associé à chaque groupe.

12. Broyeur avec un dispositif selon une ou plusieurs des revendications 2 à 11, **caractérisé en ce que**, en partant du centre du canal d'éjection (8), les leviers de déplacement (19, 20) sont reliés aux bras (15), au niveau du capot supérieur (11), à une distance décroissante du point d'articulation avant (17) de chaque bras (15).

13. Broyeur avec un dispositif selon une ou plusieurs des revendications 2 à 12, **caractérisé en ce que** chaque levier de déplacement (19, 20) est relié à au moins un bras (15c, respectivement 15d) par l'intermédiaire d'une tête de biellette (21).

14. Broyeur avec un dispositif selon une ou plusieurs des revendications 1 à 3, **caractérisé en ce que** dans les zones extrêmes des tôles de guidage (25) situées à l'arrière par rapport à la direction d'écoulement du produit sont disposés des moyens d'entraînement (26) dont chacun est déplaçable le long d'une piste de guidage prédéfinie (27).

15. Broyeur avec un dispositif selon la revendication 14, **caractérisé en ce que** dans un capot supérieur (28) du canal d'éjection (29) sont prévues des pistes de guidage (27) le long desquelles sont guidés les moyens d'entraînement (26) conformés en tourillons.

16. Broyeur avec un dispositif selon une ou plusieurs des revendications 14 et 15, **caractérisé en ce que** les pistes de guidage (27) s'étendent suivant un rayon, entre des pistes de guidage voisines (27) la piste de guidage (27) située le plus à l'extérieur suivant le plus petit rayon.

17. Broyeur avec un dispositif selon une ou plusieurs des revendications 14 à 16, **caractérisé en ce que** les pistes de guidage (27) forment des groupes de pistes de guidage (27), et la piste de guidage (27) située le plus à l'extérieur entre des pistes de guidage voisines (27) présente la plus grande longueur en partant du centre (M) du canal d'éjection (29) et s'allonge à mesure que l'on se rapproche des deux côtés.
